# EUROPÄISCHE PATENTSCHRIFT

(11) **EP 2 174 097 B1**
(45) Veröffentlichungstag und Bekanntmachung des Hinweises auf die Patenterteilung: **13.04.2016**
(21) Anmeldenummer: 08773550.2
(22) Anmeldetag: 20.06.2008
(51) Int. Cl.: G01D 3/08, G01D 5/244, H03M 1/10, G01M 13/04, G01P 3/481, G01P 21/02, F16C 41/00, F16C 19/52

(54) **DREHGEBER MIT ÜBERWACHUNG DES LAGERVERSCHLEISSES SOWIE VERFAHREN HIERZU**
ROTARY TRANSDUCER WITH MONITORING OF THE BEARING WEAR AND METHOD THEREFOR
DÉTECTEUR DE ROTATION DOTÉ D'UNE SURVEILLANCE DE L'USURE DES PALIERS ET PROCÉDÉ DANS CE BUT

(30) Priorität: 31.07.2007 DE 102007036271
(43) Veröffentlichungstag der Anmeldung: 14.04.2010
(73) Patentinhaber: Baumer Hübner GmbH, 10967 Berlin (DE)
(72) Erfinder: WILHELMY, Lothar, 14195 Berlin (DE); HILLER, Bernhard, 13465 Berlin (DE); WILHELMY, Jochen, 10967 Berlin (DE)
(74) Vertreter: Strauss, Steffen
(86) Internationale Anmeldenummer: PCT/EP2008/004999
(87) Internationale Veröffentlichungsnummer: WO 2009/015735

(56) Entgegenhaltungen:
- WO-A-2007/006691
- DE-A1-102004 048 649

## Beschreibung

Die Erfindung betrifft einen Drehgeber, in dem eine Detektoreinrichtung mit wenigstens einem Messsensor, durch den im Betrieb ein für die Winkellage und/oder -geschwindigkeit eines mit dem Drehgeber verbundenen Gegenstandes repräsentatives Messsignal erzeugbar ist, mit wenigstens einem Rotationslager und mit wenigstens einer über das Rotationslager relativ zum Messsensor drehbar in dessen Messfeld angeordneten Maßverkörperung, und eine Überwachungseinrichtung, die datenübertragend mit dem Messsensor verbunden ist, integriert sind. Die Erfindung betrifft ferner ein Verfahren zur Verschleißkontrolle eines Drehgebers, der im Betrieb die Winkellage und/oder -geschwindigkeit eines sich drehenden, mit dem Drehgeber verbundenen Gegenstandes erfasst und als Messsignal ausgibt.

Drehgeber werden für eine Vielzahl von Anwendungen eingesetzt, um die Winkellage und/oder -geschwindigkeit eines mit dem Drehgeber verbundenen Gegenstandes, wie beispielsweise einer sich drehenden Welle, zu überwachen. Sie können Teil eines Regelkreises sein, um mit Hilfe eines Aktuators, beispielsweise eines Elektromotors, die Winkellage und/oder -geschwindigkeit des Gegenstandes auf vorgegebene Werte einzustellen.

Unter den Begriff "Drehgeber" fallen Geber mit Inkrementalsignalen, die entweder als Rechteck- oder als Sinus-Signale ausgegeben werden. Diese Geber haben normalerweise einen Nullimpuls, der einmal pro Umdrehung abgegeben wird. Zu den Drehgebem gehören auch die Absolutgeber, die als Singleturn-Geber die absolute Position innerhalb einer Umdrehung erfassen oder als Multiturn-Geber zusätzlich eine Zählschaltung für die Anzahl der absolvierten Umdrehungen aufweisen.

Um derartige Drehgeber an bestehende Regelsysteme einfach anschließen und automatisch erkennen zu können, ist aus der EP 0 425 912 B1 eine als "elektronisches Typenschild" bezeichnete Vorrichtung bekannt, bei dem ein nicht-flüchtiger Speicher innerhalb des Drehgebers Daten des Antriebs und des Drehgebers enthält. Der nicht-flüchtige Speicher kann von außerhalb des Drehgebers, beispielsweise von einem Regelsystem, ausgelesen werden.

Drehgeber stellen kritische Bauteile dar, die bei einem Ausfall oder bei Störungen zu einem Gesamtversagen des Systems führen.

Im Stand der Technik sind Maßnahmen bekannt, einen Drehgeber daraufhin zu überwachen, ob sich eine Störung oder ein Schaden ankündigt. Auf diese Weise kann rechtzeitig eine Wartung oder ein Austausch des Drehgebers vorgenommen und eine Störung oder ein Schaden vermieden werden.

Ein Überwachungssystem für Drehgeber ist in der den nächstkommenden Stand der Technik bildenden EP 0 883 249 A2 und der daraus hervorgegangenen Teilanmeldung EP 1 480 344 A1 beschrieben. Gemäß der Lehre dieser beiden Druckschriften wird durch den Messsensor und die eine Maßverkörperung bildende optisch abgetastete Kodierscheibe ein analoges Signal erzeugt, dessen Amplitude sich in Abhängigkeit vom Abstand zwischen dem Messsensor und der Maßverkörperung und Verschmutzungsgrad ändert. Sinkt die Amplitude beispielsweise aufgrund einer Verschmutzung der Kodierscheibe unter einen vorbestimmten Wert, wird ein Alarmsignal ausgegeben. Als weitere Maßnahme wird die ausgegebene Anzahl von Impulsen zwischen zwei Referenzmarken gezählt. Stimmt die ausgegebene Anzahl nicht mit der zwischen den Referenzmarken tatsächlich vorhandenen Kodierungen der Maßverkörperung überein, wird ein zweites Alarmsignal ausgegeben. Die Einrichtungen der EP 0 883 249 A1 und der EP 1 480 344 A2 überwachen demnach die Funktion des Messsensors und der Maßverkörperung.

In der EP 1 564 530 A1 ist beschrieben, dass die Amplitude des von der Detektoreinrichtung gewonnenen Signals als Indikator für eine Axialbewegung der Kodierscheibe und damit für die Größe einer auf den Detektor wirkende Axiallast dient. So kann auch überprüft werden, ob die Axiallast vorgegebene Werte überschreitet.

Ein System zur Messung der Winkelgeschwindigkeit mit einer Funktion zur Eigendiagnose ist ferner in der US 6,830,379 B2 beschrieben. Ein Diagnosekreis überprüft mit Hilfe einer von einer Batterie stammenden Gleichspannung, ob eine Sendespule, die zur drahtlosen Übertragung der Detektorsignale dient, funktioniert. Außerdem können die Signale zweier Messsensoren miteinander verglichen werden. Bei den Drehsensoren der US 6,830,379 B2 handelt es sich im Unterschied zu den obigen Drehgebern um Aufnehmer, die in Bohrungen einer Lagerschale beispielsweise eines Kraftfahrzeugrades eingesetzt werden. Eine separate, auf der Welle montierte Kodierscheibe ist im Messfeld des Aufnehmers angebracht. Im Gegensatz zu den in der EP 0 883 249 A2, EP 1 564 530 A1 und EP 1 480 334 A1 beschriebenen Drehgebern ist der Drehgeber der US 6,830,379 B2 keine integrierte Einheit, sondern besteht aus mehreren Teilen, die separat in ein Lager eingebaut werden.

In der WO 2007 006 691 A1 ist ein Verfahren und eine Vorrichtung zur Lebensdauerberechnung eines Lagers einer elektrischen Maschine mit zumindest einem Lager beschrieben.

Die DE 102 004 048 649 A1 beschreibt ein Verfahren zur Zustandsüberwachung und Lebensdauerprognose eines Wälzlagers. Zur Überwachung des Wälzlagers wird die Anzahl von Überrollungen eines Sensors durch Wälzkörper des Wälzlagers in die Auswertung einbezogen.

Unbefriedigend ist trotz dieser bekannten Lösungen nach wie vor, dass gerade der mechanische Versagensfall des Detektors nicht zuverlässig vorausgesagt werden kann.

Bei Drehgebern sind die auf dem Markt zur Überwachung von Lagern erhältlichen Geräte, z. B. "EASY-Check" der Firma FAG und "Octavis" der Firma DDC Dethloff Diagnostic Consulting nur

Unbefriedigend ist trotz dieser bekannten Lösungen nach wie vor, dass gerade der mechanische Versagensfall des Detektors nicht zuverlässig vorausgesagt werden kann.

Bei Drehgebern sind die auf dem Markt zur Überwachung von Lagern erhältlichen Geräte, z. B. "EASY-Check" der Firma FAG und "Octavis" der Firma DDC Dethloff Diagnostic Consulting nur beschränkt einsetzbar. Bei diesen Geräten handelt es sich um separate Überwachungsgeräte, die an großen Maschinen angebracht werden, um deren Kugellager zu überwachen.

Der Erfindung liegt daher die Aufgabe zugrunde, die bekannten Drehgeber so zu verbessern, dass Schadensfälle wegen mechanischer Störungen zuverlässiger vermieden werden können.

Diese Aufgabe wird für einen Drehgeber der eingangs genannten Art erfindungsgemäß dadurch gelöst, dass die Überwachungseinrichtung ein Zählwerk aufweist, in dem ein für den Verschleißzustand des Rotationslagers repräsentativer, von der im Messsignal über die Winkellage oder -geschwindigkeit enthaltenen Information gebildeter Wert dauerhaft abspeicherbar ist.

Für das eingangs genannte Verfahren wird die Aufgabe erfindungsgemäß dadurch gelöst, dass eine für den Verschleißzustand eines Rotationslagers des Drehgebers repräsentative Zustandsgröße anhand der im Messsignal über die Winkellage oder -geschwindigkeit enthaltenen Information intern überwacht und vom Drehgeber ein für den Funktionszustand des Rotationslagers repräsentatives Zustandssignal in Abhängigkeit von der Zustandsgröße ausgegeben wird. Rotationslager umfassen Gleit- und Wälzlager, letztere Rollen-, Kugel- und Nadellager.

Die erfindungsgemäße Lösung ist einfach und erlaubt eine wirkungsvolle Überwachung der mechanischen Funktion des Drehgebers. Als ein limitierender Faktor bei der Verwendung von Drehgebern hat sich nämlich überraschend das in den Drehgebern eingebaute Rotationslager erwiesen. Versagt das Rotationslager, so wird der Drehgeber unbrauchbar.

Bei den Inkrementalgebern können die Nullimpulse und bei den Absolutgebem der Übergang bei einer vollen Umdrehung als Information genutzt werden, die Anzahl der Umdrehungen, ohne Rücksicht auf die Drehrichtung, zu erfassen.

Durch die in der EP 0 883 249 A2, EP 1 480 344 A1 und EP 1 564 530 A1 beschriebenen Verfahren lassen sich weder der Verschleißzustand oder, gleichbedeutend, die Restlebensdauer des Rotationslagers ermitteln. Das von den Rotationslagem der Drehgeber ausgehende Versagensrisiko ist in diesen Druckschriften noch nicht erkannt. Im Unterschied zu den in diesen Druckschriften verfolgten Lösungen stützt sich zudem der erfindungsgemäße Lösungsansatz zur Verschleißkontrolle auf die im Messsignal direkt enthaltenen Information über Winkellage und/oder -geschwindigkeit und nicht auf zusätzliche Informationen wie die Amplitude des Messsignals. Dadurch vereinfacht sich die Auswertung des Messsignals erheblich.

Die Erfindung kann durch die folgenden, jeweils für sich vorteilhaften Ausgestaltungen, die unabhängig voneinander miteinander kombinierbar sind, weiter verbessert werden.

So kann in einer ersten vorteilhaften Weiterbildung als Zustandsgröße die Gesamtbetriebsumdrehungszahl des Rotationslagers erfasst werden. Die Gesamtbetriebsumdrehungszahl des Rotationslagers ist die Gesamtanzahl der im Wesentlichen seit Inbetriebnahme des Rotationslagers abgeleisteten Umdrehungen. Diesen Wert kann der Drehgeber als Zustandssignal direkt einer nachgeschalteten Auswerte- oder Alarmelektronik zur Verfügung stellen.

Zur Erfassung und/oder Weiterverarbeitung der für den Verschleißzustand repräsentativen Zustandsgeräte kann ein Mikroprozessor in den Drehgeber integriert sein.

Die Gesamtbetriebsumdrehungszahl kann auf besonders einfache Weise beispielsweise direkt aus der im Messsignal erhaltenen Information über die Winkellage gewonnen werden, indem die Anzahl der vom Drehgeber gemessenen Umdrehungen fortlaufend aufaddiert wird. Dies kann ferner dadurch erfolgen, dass ein Referenzsignal, das an einer bestimmten Winkelposition während einer Umdrehung des Rotationslagers einmal von der Detektoreinrichtung erzeugt wird, im Zählwerk zur Gesamtbetriebsumdrehungszahl aufaddiert wird. Ein solches Referenzsignal ist beispielsweise der Nullimpuls.

Die Verwendung der Gesamtbetriebsumdrehungszahl als Zustandsgröße ist zum einen konstruktiv wenig aufwändig, da einfache elektronische Bausteine verwendet werden können. Zum anderen nutzt diese Ausgestaltung die Messeigenschaften von Drehgebern, die prinzipbedingt eine mit der Umdrehungszahl eng verknüpfte Größe oder gar die Umdrehungszahl selbst messen, so dass wesentliche Informationen über die Restlebensdauer des Rotationslagers bereits im Messsignal selbst vorliegen. Erfindungsgemäß werden diese Informationen zur Ermittlung des Verschleißzustandes des Rotationslagers einfach mitgenutzt.

Im Drehgeber selbst kann die Gesamtbetriebsumdrehungszahl mit einer für die Restlebensdauer repräsentativen Grenzumdrehungszahl verglichen werden. Die Grenzumdrehungszahl ist diejenige Drehzahl, ab der statistisch bei gleichförmigem Betrieb des Rotationslagers mit dem Versagensfall zu rechnen ist, die also der Lebensdauer des Rotationslagers entspricht. Die Restlebensdauer und damit der Verschleißzustand des Rotationslagers ergibt sich aus der Differenz zwischen der Gesamtbetriebsumdrehungszahl und der Grenzumdrehungszahl.

Diese einfache Bestimmung des Verschleißzustandes des Rotationslagers kann verbessert werden, wenn zusätzliche Zustandsgrößen in die Bestimmung des Verschleißzustandes, also der Grenzumdrehungszahl einfließen.

So kann beispielsweise im Drehgeber ein Temperatursensor vorgesehen sein und die Temperatur des Rotationslagers oder ein Temperaturgradient im Drehgeber als für dessen Verschleiß repräsentative Zustandsgröße bei der Berechnung der Restlebensdauer des Rotationslagers in der Überwachungseinrichtung berücksichtigt werden. Der Drehgeber kann die gemessene Temperatur als die Lebensdauer des Rotationslagers mindernd berücksichtigen, wenn sie oberhalb oder unterhalb von vorbestimmten Grenztemperaturen liegt. Die Grenztemperatur kann insbesondere einer im gleichförmigen Betrieb erreichten Betriebstemperatur entsprechen, ab der eine beschleunigte Alterung des üblicherweise auf Lebenszeit geschmierten im Rotationslager einsetzt.

Gemäß einer weiteren Ausführung kann in den Drehgeber ein Mikroprozessor mit integriertem Temperatursensor eingebaut sein, der die Temperatur des Rotationslagers überwacht und die Datenverarbeitung der Messsignale und/oder Zustandsgrößen übernimmt.

In einer weiteren Ausgestaltung kann im Drehgeber ein Vibrations-, Schwingungs- und/oder Körperschallsensor vorgesehen sein, der die im Betrieb vom Rotationslager erzeugten Vibrationen als eine weitere für den Verschleißzustand repräsentative Zustandsgröße erfasst. Vibrationen von bestimmter Amplitude und/oder Frequenz können einerseits auf eine verstärkte mechanische Belastung des Drehgebers hinweisen, die lebensdauerverkürzend wirkt. Andererseits können starke Vibrationen während des Umlaufs des Rotationslagers auch auf einen hohen Verschleiß des Rotationslagers hinweisen. Die unterschiedlichen Vibrationsursachen können vom Drehgeber automatisch aufgrund ihrer Spektren unterschieden werden. Insbesondere kann automatisch vom Drehgeber als die Lebensdauer des Rotationslagers mindernd berücksichtigt werden, wenn die Amplitude der Vibrationen vorzugsweise bei vorbestimmten Frequenzen über vorbestimmten, gespeicherten Grenzwerten liegt. Insbesondere kann die Grenzumdrehungszahl verringert werden, wenn Vibrationen mit einer Amplitude über einem vorbestimmten Grenzwert bei stillstehendem Rotationslager auftreten, da dieser Belastungsfall zu einem besonders hohen Verschleiß führt.

Mit Hilfe der Körperschallsensoren lässt sich auch der korrekte Einbau des Drehgebers automatisch überprüfen. Bei falschem Einbau treten nämlich Störgeräusche auf, die durch Überschreiten eines Grenzwertes festgestellt werden können.

Um die gemessenen Vibrationen im Drehgeber automatisch den einzelnen Ursachen zuordnen zu können, können im Drehgeber vorab empirisch erzeugte Werte von Vibrationsamplituden, -frequenzen und/oder -spektren für verschiedene Verschleißzustände des Rotationslagers in einem vorzugsweise nicht-flüchtigen Speicher abgelegt sein. Diesen Werten können Kombinationen der erfassten Zustandsgrößen, wie Umdrehungszahl, Winkellage und/oder -geschwindigkeit in Form eines Kennfeldes umfassen. Den Kombinationen können ferner vorbestimmte Verringerungen der Restlebensdauer beispielsweise in Form einer Formel oder von Tabellen zugeordnet sein.

Ferner kann bei der Berechnung der Restlebensdauer automatisch als lebensdauermindernd berücksichtigt werden, wenn die aus dem Messsignal ermittelte Winkelgeschwindigkeit unter einer ersten gespeicherten Grenzgeschwindigkeit und/oder über einer zweiten gespeicherten Grenzgeschwindigkeit liegt. So gehen übermäßige Belastungen des Rotationslagers bei sehr langsamer oder sehr schneller Drehung in die berechnete Restlebensdauer ein, indem die Grenzumdrehungszahl verringert wird. In einer Weiterbildung kann eine Drehrichtungsumkehr als die Lebensdauer mindernd, oder gleichwertig, den Verschleißzustand erhöhend berücksichtigt werden. Eine Drehrichtungsumkehr führt zu einem erhöhten Verschleiß des Rotationslagers, da sich das Schmiermittel jedes Mal neu orientieren muss. Folglich kann bei dieser Weiterbildung mit jeder Drehrichtungsumkehr die Grenzumdrehungszahl um einen von der Bauform oder dem Typ des Rotationslagers abhängigen Wert herabgesetzt werden.

Der in den Drehgeber integrierte Mikroprozessor kann ferner eine interne Uhr aufweisen. Die Uhr kann beispielsweise als Betriebsstundenzähler ausgestaltet sein, die diejenige Zeitspanne misst, über die der Drehgeber bislang betrieben wurde. In Verbindung mit einem vorzugsweise nicht-flüchtigen Speicher lassen sich zudem Zeitpunkte von servicerelevanten Ereignissen, die zu einer Verringerung der Gesamtdrehzahl geführt haben, abspeichern. Die Uhr kann in Form eines in konstanten Zeitintervallen inkrementierten Zählers ausgestaltet sein. Ferner lassen sich mit Hilfe der Uhr Zeitverläufe der Zustandsgrößen als Zeitprofile abspeichern. Unter Verwendung von Zeitprofilen lassen sich Betriebszustände automatisch durch den Drehgeber bzw. Mikroprozessor erkennen, die zu einer Änderung der Restlebensdauer führen, wie beispielsweise ein Betrieb über einen längeren Zeitraum mit einer hohen Drehzahl.

Im Drehgeber kann ferner eine vorbestimmte oder während des Betriebs beispielsweise durch Mittelwert- oder Medianbildung berechnete Normalumdrehungszahl in einem vorzugsweise nicht-flüchtigen Speicher abgelegt sein. Durch den Drehgeber können Abweichungen der im Betrieb erreichten Drehzahl von der Normalumdrehungszahl überwacht und als die Lebensdauer beeinflussend berücksichtigt werden. Insbesondere kann bei einem Überschreiten der Normalumdrehungszahl um einen vorbestimmten Wert die Grenzumdrehungszahl verringert werden.

Außerdem können in der Überwachungseinrichtung selbstlernende Strukturen, wie beispielsweise neuronale Netzwerke, realisiert sein, um die empirisch ermittelten, abgespeicherten Werte während des Betriebs des Drehgebers automatisch an die konkrete Anwendungssituation anzupassen. Hierzu können die abgespeicherten Werte in Abhängigkeit von der wenigstens einen Zustandsgröße und/oder in Abhängigkeit vom Messsignal durch die Überwachungseinrichtung automatisch verändert werden. Beispielsweise kann die zulässige Betriebstemperatur oder, bei Verwendung mehrerer beabstandeter Temperatursensoren, ein räumliches Temperaturprofil zu Beginn der Betriebszeit bei einer festgelegten Drehzahl gemessen und gespeichert werden.

Das Zustandssignal kann insbesondere dann ausgegeben werden, wenn die berechnete Restlebensdauer die Grenzlebensdauer überschreitet oder die Restlebensdauer unter einen vorbestimmten Wert fällt. In diesem Fall kann das Zustandssignal als vorbestimmtes Alarmsignal ausgegeben werden, um auf diesen kritischen Betriebszustand hinzuweisen. Das Zustandssignal kann als optisches Signal, beispielsweise durch eine Warnleuchte, direkt am Sensor ausgegeben werden. Als Alarmsignal unterscheidet es sich in seiner Ausgestaltung von einem für einen nicht-kritischen Betriebszustand repräsentativen Zustandssignal. Das Zustandssignal kann auch nur als Alarmsignal ausgegeben werden, wenn beispielsweise ein normaler Betriebszustand nicht nach außerhalb des Drehgebers gemeldet werden muss.

Die Minderung der Lebensdauer anhand der wenigstens einen überwachten Zustandsgröße kann durch eine Verringerung der im Drehgeber abgespeicherten Grenzumdrehungszahl erfolgen. Diese Verringerung kann den unterschiedlichen Einfluss der Zustandsgrößen auf die Restlebensdauer durch automatische Wichtung berücksichtigen. Anstelle einer Verringerung der Grenzumdrehungszahl bei der rechnerischen Minderung der Restlebensdauer kann gleichwertig auch die Gesamtbetriebsumdrehungszahl in Abhängigkeit von diesen Zustandsgrößen automatisch erhöht werden.

Vorzugsweise über den Mikroprozessor kann in einer weiteren Ausgestaltung auch die Funktion der Detektoreinrichtung und/oder der Überwachungseinrichtung überwacht werden, wie dies beispielsweise aus der EP 0 883 249 A2 und der EP 1 480 344 A1 bekannt ist. In Abhängigkeit vom Ergebnis dieser Überwachung kann ein für den Funktionszustand repräsentatives Zustandssignal ausgegeben werden, das beispielsweise über eine Datenschnittstelle von außen auslesbar ist.

Das für den Funktionszustand der Detektoreinrichtung und/oder Überwachungseinrichtung repräsentative Zustandssignal kann auch mit dem für den Verschleißzustand repräsentativen Zustandssignal verschaltet sein. Beispielsweise kann in Abhängigkeit von diesen beiden Zustandssignalen ein weiteres Zustandssignal erzeugt werden, das für den Gesamtzustand des Drehgebers repräsentativ ist. So kann dieses weitere Zustandssignal als Alarmsignal ausgegeben werden, wenn das für den Verschleißzustand des Rotationslagers repräsentative Zustandssignal ein Überschreiten der Grenzlebensdauer darstellt und das für die Funktion der Detektoreinrichtung und/oder der Überwachungseinrichtung repräsentative Zustandssignal eine Fehlfunktion darstellt.

In einer weiteren Ausgestaltung kann das Alarmsignal ausgegeben werden, wenn eine der überwachten Zustandsgrößen einen vorbestimmten oder durch einen Selbstlernprozess angepassten Alarmgrenzwert passiert, unabhängig davon, welchen Wert die übrigen Zustandsgrößen gerade aufweisen. Durch diese Bypass-Funktion soll sichergestellt werden, dass bei starken Abweichungen nur einer Zustandsgröße von den Normwerten eine Benachrichtigung nach außerhalb erfolgt, selbst wenn die anderen Zustandsgrößen nicht auf einen fehlerhaften Betriebszustand hinweisen. Durch diese Maßnahme wird die Betriebssicherheit nochmals verbessert.

Der Drehgeber ist bevorzugt als eine Einheit aufgebaut, bei der sämtliche Einrichtungen in einem gemeinsamen Gehäuse untergebracht sind. Die für den Verschleißzustand des Rotationsgebers repräsentative Zustandsgröße kann in einem dauerhaften Speicher, beispielsweise einem elektronischen, nicht-flüchtigen Speicher abgelegt sein, so dass sie nach einem Ausfall der Stromversorgung erhalten bleibt und der Verschleißzustand des Rotationsgebers weitgehend lückenlos überwacht werden kann.

Die Erfindung wird im Folgenden anhand von Ausführungsbeispielen mit Bezug auf die beigefügten Zeichnungen beispielhaft näher erläutert.

Es zeigen:
- Fig. 1: eine schematische Darstellung der Anwendung eines erfindungsgemäßen Drehgebers;
- Fig. 2: eine schematische Darstellung des Aufbaus eines erfindungsgemäßen Drehgebers;
- Fig. 3: eine schematische Darstellung eines Details eines erfindungsgemäßen Drehgebers;
- Fig. 4: eine schematische Darstellung des Aufbaus einer Ausführungsform einer erfindungsgemäßen Überwachungseinrichtung;
- Fig. 5: eine schematische Darstellung des Aufbaus einer weiteren Ausführungsform der erfindungsgemäßen Überwachungseinrichtung.

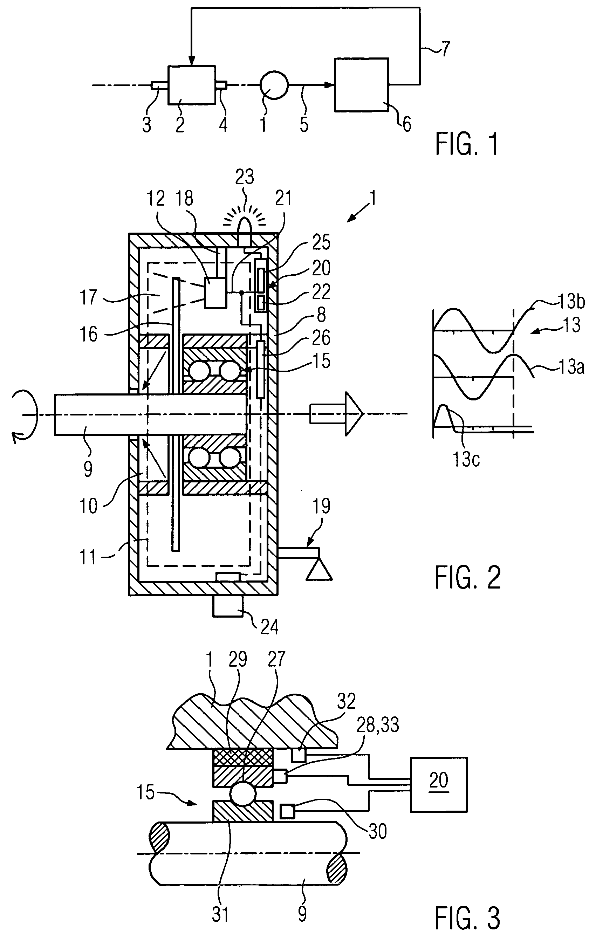

Eine typische Anwendung eines Drehgebers 1 ist in Fig. 1 gezeigt. Ein Aktuator 2, beispielsweise ein Elektromotor, treibt mit seiner Antriebswelle 3 eine (in Fig. 1 nicht gezeigte) Arbeitsmaschine an. Die Antriebsmaschine kann beispielsweise in eine Papierherstellungsmaschine eingebaut sein und mit 1.500 Umdrehungen pro Minute ununterbrochen laufen und somit 0,78 x 10⁹ Umdrehungen pro Jahr absolvieren.

Der Drehgeber 1 ist mit der Antriebswelle 3 oder, wie in Fig. 1 dargestellt, einer zweiten, mit der ersten Antriebswelle 3 üblicherweise drehstarr verbundenen Antriebswelle 4 verbunden.

Der Drehgeber 1 setzt die Winkellage und/oder -geschwindigkeit der Antriebswelle 3 bzw. 4 in elektrische Signale um und führt diese Werte über eine Leitung 5 einem Regelgerät 6 zu. Das Regelgerät 6 leitet aus dem Messsignal ein Stellsignal ab, das über eine Leitung 7 zur Steuerung des Aktuators 2 verwendet wird, um vorgegebene Sollwerte einzuhalten. Im Falle einer Papierherstellungsmaschine soll beispielsweise die Drehzahl des Elektromotors konstant gehalten werden.

Versagt der Drehgeber 1, so kann eine Steuerung des Aktuators 2 nicht mehr erfolgen.

Der Aufbau des Drehgebers 1 ist im Folgenden mit Bezug auf die Fig. 2 genauer erläutert. Der Drehgeber 1 weist ein vorzugsweise abgedichtetes und gekapseltes Gehäuse 8 auf, aus dem eine Geberwelle 9 ragt, mit der ein zu überwachender, sich drehender Gegenstand, wie beispielsweise die Antriebswelle 4, verbindbar ist. Die Geberwelle 9 kann, wie in Fig. 2 dargestellt ist, als Vollwelle ausgestattet und dann über einen Flansch (nicht gezeigt) mit der Antriebswelle 4 verbunden sein. Die Geberwelle 9 kann aber auch als Hohlwelle auf die Antriebswelle 4 aufschiebbar ausgestaltet sein. Über Dichtungselemente 10 ist das Innere des Drehgebers 1 staub- und vorzugsweise auch wasserdicht abgedichtet. Für bestimmte Anwendungen kann das Innere des Drehgebers auch explosionsdicht gekapselt sein.

Im Inneren des Gehäuses 8 ist eine in Fig. 2 durch Strichlinien schematisch dargestellte Detektoreinrichtung 11 angeordnet. Die Detektoreinrichtung 11 weist einen Messsensor 12 auf, durch den im Betrieb ein für die Winkellage und/oder -geschwindigkeit des über die Geberwelle 9 mit dem Drehgeber 1 verbundenen Gegenstandes repräsentatives Messsignal 13 beispielsweise mit einem Quadrantensignals aus einer Sinuswelle 13a, einer Cosinuswelle 13b und einem ein- oder mehrmals pro Umdrehung an vorgegebener Winkellage erzeugten Referenzsignals 13c erzeugbar ist.

Die Detektoreinrichtung 11 weist ferner wenigstens ein Rotationslager 15, beispielsweise in Form eines Rollenlagers, und wenigstens eine Maßverkörperung 16 auf.

Das Rotationslager 15 kann ein lebensdauergeschmiertes Wälzlager sein. Die Lebensdauer des Rotationslagers 15 ist begrenzt, sie beträgt wegen der Haltbarkeit des Schmierstoffes im Rotationslager beispielsweise etwa 5 Jahre. Für die oben angeführten Papierherstellungsmaschinen ergibt sich bei dieser Lebensdauer eine Grenzumdrehungszahl von etwa 4 x 10⁹ Umdrehungen. Unter Berücksichtigung von Stillstandszeiten entspricht dies etwa 40.000 Betriebsstunden.

Die Maßverkörperung 16 ist über das Rotationslager 15 relativ gegenüber dem Messsensor 12 drehbar in dessen Messfeld 17 angeordnet. Beispielsweise kann die Maßverkörperung in Form einer mit der Geberwelle 9 im Wesentlichen drehstarr verbundenen Kodierscheibe ausgestaltet sein, die in Umfangsrichtung mit äquidistant angeordneten optischen und/oder magnetischen Auslöseelementen versehen ist. Die Auslöseelemente bewirken beim Durchschreiten des Messfeldes 17 die Erzeugung eines Messimpulses im Messsignal 13, 14 durch den Messsensor 12. Der Messsensor 12 kann bewegungsstarr mit dem Gehäuse 8 verbunden sein, wie durch die Halteeinrichtung 18 schematisch angedeutet ist. Das Gehäuse 8 stützt sich über eine Momentenstütze 19 an einem gegenüber der Geberwelle 9 stationären, in Fig. 2 nicht dargestellten Gegenstand, wie beispielsweise einem Motorschild oder einem Fundament ab.

Der Drehgeber 1 ist ferner mit einer vorzugsweise elektronischen Überwachungseinrichtung 20, beispielsweise einem Mikroprozessor, versehen, die beispielsweise über eine Leitung 21 datenübertragend mit dem Messsensor 12 verbunden ist. Die Überwachungseinrichtung 20 kann einen Signalgenerator 22 aufweisen, durch den im Betrieb in Abhängigkeit von der im Messsignal 13 enthaltenen Information über die Winkellage und/oder -geschwindigkeit ein für den Verschleißzustand des Drehgebers 1 repräsentatives Zustandssignal, beispielsweise in Form eines Lichtalarms 23 oder eines über eine Steckverbindung 24 elektrischen Signals, ausgegeben wird.

Die elektronische Überwachungseinrichtung 20 weist ferner ein Zählwerk 25 auf, in dem ein für den Verschleißzustand des Rotationslagers 15 repräsentativer Wert dauerhaft abspeicherbar ist.

Der Drehgeber 1 kann eine Korrektureinrichtung 26 aufweisen, welche das Messsignal 13 filtert und korrigiert, bevor es zusammen mit dem Zustandssignal über die Steckverbindung 24 an nachgeschaltete Geräte, wie beispielsweise den Regler 6, geleitet wird. Das Messsignal 13 und das Zustandssignal können in analoger oder digitaler Form ausgegeben werden.

Der in Fig. 2 schematisch dargestellte Aufbau des Drehgebers 1 kann, wie in Fig. 3 gezeigt, modifiziert sein.

An einem Außenring 27 des Rotationslagers 15 oder einem anderen Element des Drehgebers 1 kann ein Körperschallsensor 28 angebracht sein, der die bei der Drehung der Geberwelle 9 vom Rotationslager 15 erzeugten Vibrationen erfasst.

Die gemessenen Vibrationen können im Zuge eines Selbstlernprozesses innerhalb der Überwachungseinrichtung 20 automatisch mit einem Vibrations- oder Geräuschmuster, das bei Neuinstallation des Drehgebers in der Überwachungseinrichtung 20 gespeichert wurde, verglichen werden. Wenn die vom Körperschallsensor 28 erfasste Zustandsgröße einen vorbestimmten Wert überschreitet oder von einer vorbestimmten Verteilung über ein vorbestimmtes Maß hinaus abweicht, wird dies bei der Ausgabe des Zustandssignals 23 berücksichtigt.

Das Rotationslager 15 kann durch einen elektrisch und vorzugsweise auch thermisch isolierenden Zwischenring 29 umgeben und somit isoliert in den in Fig. 3 lediglich schematisch dargestellten Drehgeber 1 eingebaut sein, um eine Beschädigung der Elektronik des Drehgebers durch Lagerströme aus beispielsweise dem Aktuator 2 zu vermeiden.

Ferner kann im Drehgeber auch ein Temperatursensor 30 vorgesehen sein, der eine Temperatur eines Lagerinnenringes 31 erfasst. Der Temperatursensor 30 kann insbesondere ausgebildet sein, die Strahlungswärme des sich ihm gegenüber drehenden Lagerinnenringes 31 kontaktlos zu überwachen.

Ein weiterer Temperatursensor 32, beispielsweise als integrierter Bestandteil eines Mikroprozessors, kann die Temperatur des Drehgebers an einer durch den Zwischenring 29 vom Lagerinnenring 31 getrennten Stelle, wie beispielsweise dem Gehäuse 8, überwachen. Am Außenring 27 des Rotationslagers 15 kann ebenfalls ein Temperatursensor 33 vorgesehen sein.

Bei der Verwendung der Temperatursensoren 30, 32 bzw. 30, 32, 33 erhält die Überwachungseinrichtung 11 Informationen über den Temperaturgradienten von der Welle zum Gehäuse 8. Der Temperaturgradient hängt von der jeweiligen Drehzahl und dem Verschleißzustand des Rotationslagers 15 ab. Er gibt damit ein Maß für die vom Rotationslager noch erreichbaren Restlebensdauer ab.

In der Überwachungseinrichtung 20 kann in einem selbstlernenden Verfahren ein anfänglicher Temperaturgradient abgespeichert sein, der mit dem durch den wenigstens einen Temperatursensor 30, 32, 33 erfassten Temperaturgradienten verglichen wird.

Die Sensoren 28, 30, 32, 33 sind insbesondere innerhalb des Gehäuses 8 (vgl. Fig. 1) des Drehgebers 1 angeordnet.

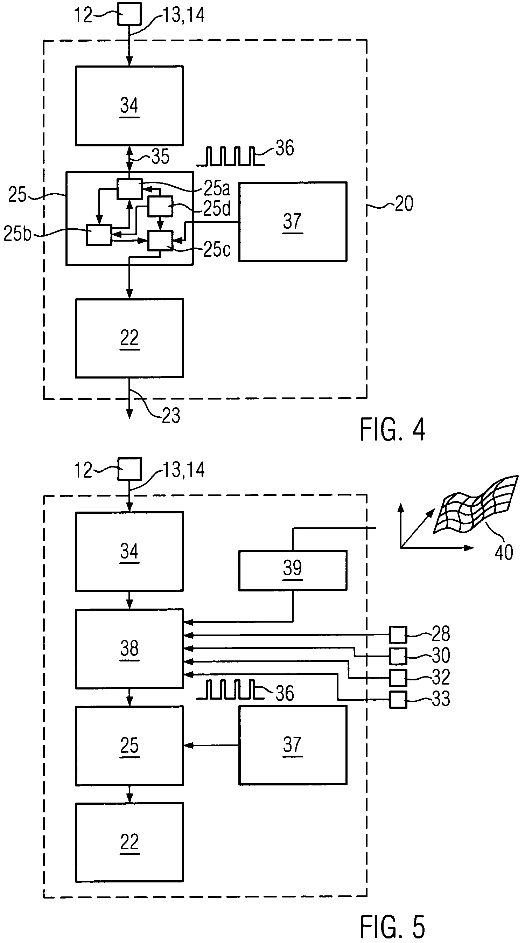

Anhand der schematischen Darstellung der Fig. 4 wird nun die Funktion des erfindungsgemäßen Drehgebers 1 erläutert.

Der Überwachungseinrichtung 20 wird das Messsignal 13 als eine den Verschleißzustand des Rotationslagers 10 beschreibende Zustandsgröße zugeführt.

In einem ersten Schritt wird in einer Signalkonditioniereinrichtung 34 aus dem Messsignal 13 ein Umdrehungssignal 35 gewonnen, das eine bestimmte Anzahl von Zählimpulsen 36, vorzugsweise einen einzigen Zählimpuls, für jede Umdrehung der Geberwelle 9 enthält. Ein solches Signal kann insbesondere direkt aus dem Referenzsignal 13c im Messsignal oder aber aus den Quadrantensignalen 13a, 13b gewonnen werden, da die Anzahl der einen Messimpuls auslösenden Markierungen auf der Maßverkörperung 16 pro Umdrehung bekannt ist. Alternativ kann das Umdrehungssignal 35 auch durch eine Integration des Geschwindigkeitssignals berechnet werden. Wenn ein Referenzsignal 14 direkt von dem Messsensor 12 erzeugt wird, kann die Signalkonditioniereinrichtung 34 auch entfallen.

Im Zählwerk 25 wird als für den Verschleißzustand repräsentative Zustandsgröße die von der Detektoreinrichtung 11 gemessene Zahl der Umdrehungen zu einer Gesamtbetriebsdrehzahl des Rotationslagers 15 aufaddiert und dauerhaft gespeichert. Zum Addieren der Umdrehungswerte kann das Zählwerk 25, beispielsweise in Form eines Mikroprozessors, ein Addierwerk 25a und zum dauerhaften Abspeichern der Gesamtbetriebsumdrehungszahl vorzugsweise einen elektronischen nicht-flüchtigen Speicher 25b aufweisen. Der nicht-flüchtige Speicher 25b kann vorzugsweise neben der Gesamtbetriebsumdrehungszahl noch weitere Parameter speichern, wie die konstruktiven Merkmale des Drehgebers 1, wie beispielsweise die Anzahl der Markierungen auf der Maßverkörperung 16 sowie Herstellerangaben.

Der nicht-flüchtige Speicher 25b kann beispielsweise über ein Bussystem (nicht dargestellt) adressiert und von anderen Geräten, wie beispielsweise dem Regler 6, über standardisierte Protokolle als Zustandssignal 23 ausgelesen werden.

Die Überwachungseinrichtung 20 weist ferner einen dauerhaften Speicher 37 auf, der eine vorab gespeicherte Grenzumdrehungszahl des Rotationslagers 15 als dessen Lebensdauergrenze aufweist. Im vorliegenden Beispiel beträgt die Grenzumdrehungszahl 4 x 10⁹ Umdrehungen. Ein im Zählwerk 25 vorhandener Komparator 25c vergleicht die Gesamtbetriebsumdrehungszahl mit der Grenzumdrehungszahl und gibt über beispielsweise den Signalgenerator 22 das Zustandssignal 23 aus, wenn die Gesamtbetriebsumdrehungszahl über die Grenzumdrehungszahl steigt und/oder die Differenz der beiden Werte unter einen vorbestimmten Grenzwert fällt. Die Grenzumdrehungszahl ist repräsentativ für die Lebensdauer des Rotationslagers 15, die Gesamtbetriebsumdrehungszahl ist repräsentativ für den Verschleißzustand des Rotationslagers 15. Ihre Differenz ist ein repräsentativer Wert für die Restlebensdauer.

Das Zählwerk 25 kann auch eine Uhr 25d aufweisen, beispielsweise in Form eines in konstanten Zeitintervallen inkrementierten Zählers. Die Uhr kann ferner die Betriebsstunden des Drehgebers nicht-flüchtig abspeichern.

Der Signalgenerator 22 kann als eine elektronische Datenschnittstelle ausgestaltet sein, die normierte bzw. vorbestimmte Signale oder Signalfolgen 23 ausgibt, oder als Signalgeber beispielsweise eine LED oder anderer Anzeigeinstrumente betätigen. Beispielsweise kann eine wenigstens zweifarbige rot-grüne LED eingesetzt werden, die auf grün geschaltet ist, solange die Gesamtbetriebsumdrehungszahl bzw. ein unter der Gesamtbetriebsumdrehungszahl liegender erster, als erste Warnstufe dienender Grenzwert, der insbesondere ca. ¼ bis ½ der Gesamtbetriebsumdrehungszahl betragen kann, nicht überschritten sind. Wird der erste Grenzwert überschritten, wird mit zunehmender Gesamtbetriebsumdrehungszahl bzw. abnehmender Differenz zwischen Gesamtbetriebsumdrehungszahl und Grenzumdrehungszahl, zunehmend rot zum Grünanteil der LED hinzugemischt, so dass die LED zunehmend orange erscheint. Wird die Grenzlebensdauer überschritten, so wird das Signal 23 automatisch in Form eines Alarmsignal angegeben. Das Alarmsignal repräsentiert einen Betriebszustand, der einen Eingriff durch Personal notwendig macht, und weist beispielsweise auf Funktionsfehler oder Verschleiß hin. Ab dem Überschreiten der Grenzumdrehungszahl ist die LED dann auf rot geschaltet.

Der Vorteil des Verfahrens liegt in der sehr einfachen Verschleißüberwachung des Rotationslagers, die allein anhand der im normalen Betrieb des Drehgebers 1 erzeugten Messsignale 13, 14 erfolgt.

In einer Weiterbildung eines Verfahrens kann das Zählwerk 25 zusätzlich zur Zahl der Umdrehungen die vom Messsensor 12 erfasste Winkelgeschwindigkeit bei der Ermittlung des Verschleißzustandes automatisch berücksichtigen. Liegt die gemessene Winkelgeschwindigkeit über einer ersten Grenzgeschwindigkeit, wie beispielsweise 1.500 U/min, oder unter einer zweiten Grenzgeschwindigkeit, wie beispielsweise 750 U/min, so wird die Grenzumdrehungszahl verringert. Auf diese Weise geht der erhöhte Verschleiß bei einem Betrieb jenseits der Grenzgeschwindigkeiten in den berechneten Verschleißzustand des Rotationslagers 15 mit ein. Außerdem kann eine Drehrichtungsumkehr vom Zählwerk erfasst und automatisch als die Grenzumdrehungszahl mindernd berücksichtigt werden. Mit Hilfe der Uhr 25d lassen sich die Zeiten und die Werte der Zustandsgrößen abspeichern, die zu einer Verringerung der Grenzumdrehungszahl geführt haben. Außerdem lassen sich Zeitprofile der vom Drehgeber überwachten Zustandsgrößen ermitteln. Beispielsweise kann die Häufigkeit eines Wechsels der Zustandsgröße pro Zeiteinheit bei der Änderung der Grenzumdrehungszahl automatisch berücksichtigt werden. So kann beispielsweise bei einem Betrieb des Drehgebers über längere Zeit bei im Wesentlichen konstanter Drehzahl und im Wesentlichen konstanter Temperatur die Grenzumdrehungszahl erhöht werden, was einer Verlängerung der Restlebensdauer entspricht. Bei den oben genannten Papierherstellungsmaschinen wird beispielsweise die Grenzumdrehungszahl von 4 x 10⁹ auf 5 x 10⁹ erhöht werden, wenn sich die während des Betriebs ermittelte Drehzahl zwischen 500 und 1000 bewegt, also etwa bei ¹/₃ bis ²/₃ der für die Grenzumdrehungszahl relevanten Drehzahl.

Das in Fig. 4 gezeigte Verfahren kann ferner ergänzt werden, indem die Signale der in Fig. 3 gezeigten zusätzlichen Sensoren als Zustandsgrößen für den Verschleißzustand des Rotationslagers 15 berücksichtigt werden. Ein solches Verfahren ist im Folgenden beispielhaft mit Bezug auf die Fig. 5 erläutert. Dabei wird der Kürze halber lediglich auf die Unterschiede zur Ausführungsform der Fig. 4 eingegangen. In Fig. 5 sind, soweit bekannte Elemente betroffen sind, die Bezugszeichen der Fig. 4 verwendet.

Bei dem Verfahren der Fig. 5 ist zusätzlich eine Berechnungseinrichtung 38 vorgesehen, welche die Signale der Sensoren 28, 30, 32, 33 empfängt und in einem dauerhaften Speicher 39 abgelegte, empirisch ermittelte Kennkurven 40 als Eingangsgrößen abrufen kann.

Die Berechnungseinrichtung 38 berücksichtigt, dass die Lebensdauer des Rotationslagers 15 gegenüber der für einen gleichmäßigen Betrieb bei nahezu konstanter Temperatur und Drehzahl angegebenen Lebensdauer stark absinken kann, wenn das Rotationslager 15 bei stark wechselnden Bedingungen betrieben wird. So kann die Grenzlebensdauer in Form der Grenzumdrehungszahl durch die Berechnungseinrichtung 38 verringert werden, wenn beispielsweise der Betrieb bei sehr niedrigen Temperaturen oder bei sehr hohen Temperaturen, die unter oder über entsprechenden Grenztemperaturen liegen, stattfindet. Ist beispielsweise in einem Selbstlernprozess vom Drehgeber 1 im Zuge der ersten Betriebsstunden automatisch festgestellt oder fest vorprogrammiert, dass im Normalbetrieb eine Lagertemperatur von 70° C herrscht, so kann mit jedem Grad Temperaturerhöhung nach Ablauf von einer vorbestimmten Anzahl von Umdrehungen die Grenzumdrehungszahl um einen vorbestimmten Wert verringert werden. Auch der sich im Normalbetrieb einzustellende Temperaturgradient über die Temperatursensoren 28, 30, 32 kann vom Drehgeber in einem Selbstlernprozess automatisch vorbestimmt oder vorprogrammiert werden. Gleiches gilt bei starken Vibrationen des Rotationslagers während des Betriebs.

Anstelle einer Änderung der Grenzumdrehungszahl können auch die Umdrehungszahlen in Abhängigkeit von den während dieser Umdrehungen herrschenden Zustandsgrößen bei der Aufaddierung der Gesamtbetriebsumdrehungszahl gewichtet werden.

Die Kennfelder 40 können in Tabellenform oder als Formeln im Speicher 39 abgelegt sein. Insbesondere bei der Verwendung mehrdimensionaler Kennfelder lassen sich kombinierte Einflüsse auf die Lebensdauer, wie beispielsweise ein Betrieb bei hoher Drehzahl und gleichzeitig hohen Vibrationen bei niedrigen Temperaturen berücksichtigen.

Weicht eine der überwachten Zustandsgrößen stark von den bei einem störungsfreien Betrieb herrschenden Werten ab, beispielsweise wenn diese Größe einen vorbestimmten Alarmgrenzwert passiert, dann kann das Alarmsignal auch unabhängig von den Werten der übrigen überwachten Zustandsgrößen ausgegeben werden. Dies ist beispielsweise dann der Fall, wenn im Drehgeber kritische Temperaturen überschritten sind, die auch elektronische Komponenten beeinträchtigen können, oder sehr starke Vibrationen auftreten, nach denen eine Funktion des Drehgebers nicht mehr gewährleistet werden kann.

Der Mikroprozessor 25 kann auch die an sich bekannte Überwachung der Funktion der Detektoreinrichtung 11 und der Überwachungseinrichtung 20 sowie der Sensoren 28, 30, 32, 33 durchführen. Das Ergebnis dieser Überwachung kann mit dem Ergebnis der Überwachung des Verschleißzustandes verschaltet werden. Beispielsweise kann ein für einen fehlerhaften Betriebszustand repräsentatives Zustandssignal dann ausgegeben werden, wenn die Überwachung des Verschleißzustandes ein Passieren der Grenzlebensdauer und/oder die Funktionsüberwachung einen Funktionsfehler darstellt. Dies kann beispielsweise durch eine logische Oder-Verknüpfung der beiden Überwachungsergebnisse bzw. Zustandsgröße erfolgen.

## Patentansprüche

1. Drehgeber (1), in dem eine Detektoreinrichtung (11) mit wenigstens einem Messsensor (12), durch den im Betrieb ein für die Winkellage und/oder - geschwindigkeit eines mit dem Drehgeber verbindbaren Gegenstandes repräsentatives Messsignal (13, 14) erzeugbar ist, mit wenigstens einem Rotationslager (15) und mit wenigstens einer über das Rotationslager (15) relativ zum Messsensor (12) drehbar in dessen Messfeld (17) angeordneten Maßverkörperung (16), und eine Überwachungseinrichtung (20), die datenübertragend mit dem Messsensor (12) verbunden ist, integriert sind, **dadurch gekennzeichnet, dass** die Überwachungseinrichtung (20) ein Zählwerk (25) aufweist, in dem ein für den Verschleißzustand des Rotationslagers (15) repräsentativer, von der im Messsignal (13) enthaltenen Information über die Winkellage und/oder -geschwindigkeit gebildeter Wert einer Gesamtbetriebsumdrehungszahl dauerhaft gespeichert ist.

2. Drehgeber (1) nach Anspruch 1, wobei der Drehgeber (1) ein Gehäuse (8) aufweist, indem die Detektoreinrichtung (11) und die Überwachungseinrichtung (20) aufgenommen sind.

3. Drehgeber (1) nach Anspruch 1 oder 2, wobei das Zählwerk (25) einen nichtflüchtigen elektronischen Speicher (25b) umfasst und/oder einen Addierer (25a) aufweist, in dem wenigstens während des Betriebs eine aus dem Messsignal (13,14) gebildete Umdrehungszahl aufaddierbar ist.

4. Drehgeber (1) nach einem der Ansprüche 1 bis 3, wobei die Überwachungseinrichtung (20) einen Komparator (25c) aufweist, durch den ein im Zählwerk (25) abgespeicherter Wert der Umdrehungszahl mit einem vorgebbaren Grenzwert vergleichbar ist.

5. Drehgeber (1) nach einem der Ansprüche 1 bis 4, wobei in dem Drehgeber (1) wenigstens ein Temperatursensor (30, 32, 33) integriert ist, durch den eine für die Temperatur des Rotationslagers (15) repräsentative Temperatur erfassbar ist und/oder in dem Drehgeber (1) ein Körperschallsensor (28) integriert ist, durch den ein vom Rotationslager (15) im Betrieb erzeugter Körperschall erfassbar ist.

6. Verfahren zur Verschleißüberwachung eines Drehgebers (1), der im Betrieb die Winkellage und/oder -geschwindigkeit eines sich drehenden, mit dem Drehgeber verbundenen Gegenstandes (3) erfasst, und als Messsignal (13) ausgibt, **dadurch gekennzeichnet, dass** eine für den Verschleißzustand eines Rotationslagers (15) des Drehgebers (1) repräsentative Zustandsgröße anhand der im Messsignal (13) über die Winkellage und/oder -geschwindigkeit enthaltenen Information überwacht und vom Drehgeber (1) ein für den Funktionszustand des Rotationslagers (15) repräsentatives Zustandssignal ausgegeben wird, wobei als Zustandsgröße eine Gesamtbetriebsumdrehungszahl des Rotationslagers (15) erfasst wird.

7. Verfahren nach Anspruch 6, in dem der Drehgeber (1) die Umdrehungen unabhängig von der Drehrichtung als Zustandsgröße aufaddiert und insbesondere die aufaddierte Zahl der Umdrehungen als Zustandssignal direkt zur Verfügung stellt und/oder in dem der Drehgeber (1) intern die Temperatur des Rotationslagers (15)als Zustandsgröße erfasst und/oder in dem der Drehgeber (1) intern die Vibrationen des Rotationslagers (15) als Zustandsgröße erfasst.

8. Verfahren nach Anspruch 6 oder 7, in dem der Drehgeber die seit Inbetriebnahme abgeleistete Gesamtbetriebsumdrehungszahl des Rotationslagers (15) direkt aus dem Messsignal (13) ermittelt.

9. Verfahren nach einem der Ansprüche 6 bis 8, in dem der Drehgeber die Zustandsgröße mit einem vorab gespeicherten Wert vergleicht und das Zustandssignal in Abhängigkeit vom Ergebnis dieses Vergleichs erzeugt.

10. Verfahren nach Anspruch 9, in dem der Drehgeber das Zustandssignal ausgibt, wenn eine aus der Zustandsgröße berechnete Restlebensdauer eine gespeicherte Restlebensdauer unterschreitet.

11. Verfahren nach Anspruch 10, in dem durch den Drehgeber die Lebensdauer des Rotationslagers (15) mindernd berücksichtigt wird, wenn die aus dem Messsignal ermittelte Winkelgeschwindigkeit unter einer ersten gespeicherten Grenzgeschwindigkeit und/oder über einer zweiten gespeicherten Grenzgeschwindigkeit liegt; und/oder wenn die überwachte Temperatur unter einer ersten gespeicherten Grenztemperatur und/oder über einer zweiten gespeicherten Grenztemperatur liegt; und/oder wenn die Amplitude der überwachten Vibrationen über einen gespeicherten Grenzwert liegt.

12. Verfahren nach einem der Ansprüche 6 bis 11, in dem in dem Drehgeber (1) der Zeitverlauf der wenigstens einen Zustandsgröße von außerhalb des Drehgebers auslesbar abgespeichert wird.

13. Verfahren nach einem der Ansprüche 6 bis 12, in dem durch den Drehgeber die Funktion der Detektoreinrichtung (11) und/oder der Überwachungseinrichtung (20) überwacht und ein für deren Funktionszustand repräsentatives Zustandssignal ausgegeben wird.

14. Verfahren nach Anspruch 13, in dem ein einen fehlerhaften Betriebszustand repräsentierendes Alarmsignal ausgegeben wird, wenn bei der Überwachung des Verschleißzustandes die Grenzlebensdauer passiert wird und/oder das für die Funktionsüberwachung repräsentative Zustandssignal eine Fehlfunktion darstellt.

15. Verfahren nach einem der Ansprüche 6 bis 14, in dem bei Überschreiten eines Alarmgrenzwertes durch eine überwachte Zustandsgröße ein Alarmsignal unabhängig von den Werten der übrigen überwachten Zustandsgrößen ausgegeben wird.

## Claims

1. Rotary encoder (1) having integrated therein a detector device (11) comprising at least one measurement sensor (12) by which, during operation, a measurement signal (13, 14) can be generated that is representative of the angular position and/or velocity of an object which is connectable to the rotary encoder, at least one rotary bearing (15), and at least one material measure (16) which is arranged rotatable relative to the measurement sensor in the measurement field (17) thereof by means of the rotary bearing, and a monitoring device (20) which is connected to the measurement sensor such that data are transmitted, **characterized in that** the monitoring device (20) comprises a counter (25) which can permanently store a value which is representative of the state of wear of the rotary bearing (15) and is formed from the information contained in the measurement signal (13) on the angular position and/or velocity.

2. Rotary encoder (1) in accordance with Claim 1, whereby the rotary encoder (1) comprises a housing (8) in which the detector device (11) and the monitoring device (20) are accommodated.

3. Rotary encoder (1) in accordance with Claim 1 or 2, whereby the counter (25) comprises a non-volatile electronic memory (25b) and/or an adder (25a) in which at least during operation a revolution number formed from the measurement signal (13, 14) can be added up.

4. Rotary encoder (1) in accordance with one of the Claims 1 to 3, whereby the monitoring device (20) comprises a comparator (25c) by which a value of the revolution number stored in the counter (25) can be compared with a predeterminable limit value.

5. Rotary encoder (1) in accordance with one of the Claims 1 to 4, whereby the rotary encoder (1) has integrated therein at least one temperature sensor (30, 32, 33) by which a temperature representative of the rotary bearing (15) can be sensed and/or the rotary encoder (1) has integrated therein a structure-borne sound sensor (28) by which a structure-borne sound produced by the rotary bearing (15) during operation can be sensed.

6. Method for monitoring wear of a rotary encoder (1) which during operation senses the angular position and/or velocity of a rotating object (3) connected to the rotary encoder and outputs it as a measurement signal (13), **characterized in that** a state variable representative of the wear condition of a rotary bearing (15) of the rotary encoder (1) is monitored on the basis of the information contained in the measurement signal (13) on the angular position and/or angular velocity, and a state signal representative of the functional state of the rotary bearing (15) is output by the rotary encoder (1), whereby a total operation revolution number of the rotary bearing (15) is sensed as a state variable.

7. Method in accordance with Claim 6, wherein the rotary encoder (1) adds up the revolutions independently of the rotary direction as a state variable and in particular directly provides the added-up number of revolutions as a state signal and/or wherein the rotary encoder (1) internally senses the temperature of the rotary bearing (15) as a state variable and/or wherein the rotary encoder (1) internally senses the vibrations of the rotary bearing (15) as a state variable.

8. Method in accordance with Claim 6 or 7, wherein the rotary encoder directly determines, on the basis of the measurement signal (13), the number of revolutions the rotary bearing (15) performed since the start of operation.

9. Method in accordance with one of the Claims 6 to 8, wherein the rotary encoder compares the state variable with a previously stored value and generates the state signal in response to the result of said comparison.

10. Method in accordance with Claim 9, wherein the rotary encoder outputs the state signal whenever a residual life calculated on the basis of the state variable falls below a stored residual life.

11. Method in accordance with Claim 10, wherein the rotary encoder takes into account the life of the rotary bearing (15) in a reducing way if the angular velocity determined from the measurement signal is below a first stored limit velocity and/or above a second stored limit velocity; and/or if the monitored temperature is below a first stored limit temperature and/or above a second stored limit temperature; and/or if the amplitude of the monitored vibrations are above a stored limit value.

12. Method in accordance with one of the Claims 6 to 11, wherein in the rotary encoder (1) the time progression of the at least one state variable is stored to be readable from outside the rotary encoder.

13. Method in accordance with one of the Claims 6 to 12, wherein the rotary encoder monitors the function of the detector device (11) and/or the monitoring device (20) and outputs a state signal representative of the functional state thereof.

14. Method in accordance with Claim 13, wherein an alarm signal which is representative of a faulty operative state is output when during monitoring of the wear state the limit life is passed and/or the state signal representative of the function monitoring represents a malfunction.

15. Method in accordance with one of the Claims 6 to 14, wherein when an alarm limit value is exceeded by a monitored state variable, an alarm signal is output independently of the values of the other monitored state variables.

## Revendications

1. Codeur (1), dans lequel sont intégrés un dispositif de détection (11) doté d'au moins un détecteur de mesure (12), par le biais duquel peut être généré en cours de fonctionnement un signal de mesure (13, 14) représentatif de l'orientation angulaire et/ou de la vitesse angulaire d'un objet pouvant être raccordé au codeur, avec au moins un palier de rotation (15) et avec au moins un étalon de mesure (16) disposé au-dessus du palier de rotation (15) par rapport au détecteur de mesure (12) de manière orientable dans son champ de mesure (17), et un dispositif de contrôle (20) qui est raccordé au détecteur de mesure pour le transfert de données, **caractérisé en ce que**
le dispositif de contrôle (20) présente un compteur (25), dans lequel est sauvegardée durablement une valeur d'un nombre total de tours de fonctionnement représentative de l'état d'usure du palier de rotation (15), constituée de l'information contenue dans le signal de mesure (13) sur le palier angulaire et/ou la vitesse angulaire.

2. Codeur (1) selon la revendication 1, le codeur (1) présentant un boîtier (8), dans lequel le dispositif de détection (11) et le dispositif de contrôle (20) sont logés.

3. Codeur (1) selon la revendication 1 ou 2, le compteur (25) comprenant une mémoire électronique rémanente (25b) et/ou présentant un additionneur (25a), dans lequel un nombre de tours constitué du signal de mesure (13, 14) peut être additionné au moins en cours de fonctionnement.

4. Codeur (1) selon l'une des revendications 1 à 3, le dispositif de contrôle (20) présentant un comparateur (25c), par le biais duquel une valeur enregistrée dans le compteur (25) du nombre de tours est comparable à une valeur limite pouvant être prédéfinie.

5. Codeur (1) selon l'une des revendications 1 à 4, au moins un capteur de température (30, 32, 33) étant intégré dans le codeur (1), ledit capteur de température pouvant détecter une température représentative de la température du palier de rotation (15) et/ou un capteur de bruit de structure (28) étant intégré dans le codeur (1), ledit capteur de bruit de structure pouvant détecter un bruit de structure généré en cours de fonctionnement par le palier de rotation (15).

6. Procédé de contrôle de l'usure d'un codeur (1), qui détecte en cours de fonctionnement l'orientation angulaire et/ou la vitesse angulaire d'un objet (3) rotatif raccordé au codeur, et émet un signal de mesure (13),
**caractérisé en ce qu'**une grandeur d'état représentative de l'état d'usure d'un palier de rotation (15) du codeur (1) est contrôlée à l'aide de l'information contenue dans le signal de mesure (13) sur l'orientation angulaire et/ou la vitesse angulaire et un signal d'état représentatif de l'état de fonctionnement du palier de rotation (15) est émis par le codeur (1), un nombre total de tours de fonctionnement du palier de rotation (15) étant détecté en tant que grandeur d'état.

7. Procédé selon la revendication 6, dans lequel le codeur (1) additionne les tours en tant que grandeur d'état indépendamment du sens de rotation et fournit directement en particulier le nombre additionné de tours en tant que signal d'état et/ou dans lequel le codeur (1) détecte de manière interne la température du palier de rotation (15) en tant que grandeur d'état et/ou dans lequel le codeur (1) détecte de manière interne les vibrations du palier de rotation (15) en tant que grandeur d'état.

8. Procédé selon la revendication 6 ou 7, dans lequel le codeur détermine le nombre total de tours de fonctionnement du palier de rotation (15) réalisés depuis la mise en service directement à partir du signal de mesure (13).

9. Procédé selon l'une des revendications 6 à 8, dans lequel le codeur compare la grandeur d'état à la valeur enregistrée au préalable et génère le signal d'état en fonction du résultat de cette comparaison.

10. Procédé selon la revendication 9, dans lequel le codeur émet le signal d'état, lorsqu'une durée de vie résiduelle calculée à partir de la grandeur d'état est inférieure à la durée de vie résiduelle enregistrée.

11. Procédé selon la revendication 10, dans lequel la durée de vie du palier de rotation (15) est considérée à la baisse, lorsque la vitesse angulaire déterminée à partir du signal de mesure est inférieure à une première vitesse limite enregistrée et/ou supérieure à une seconde vitesse limite enregistrée ; et/ou lorsque la température contrôlée est inférieure à une première température limite enregistrée et/ou supérieure à une seconde température limite enregistrée, et/ou lorsque l'amplitude des vibrations contrôlées est supérieure à une valeur limite enregistrée.

12. Procédé selon l'une des revendications 6 à 11, dans lequel le temps écoulé de la au moins une grandeur d'état est enregistré dans le codeur (1) en étant sélectionnable depuis l'extérieur du codeur.

13. Procédé selon l'une des revendications 6 à 12, dans lequel le fonctionnement du dispositif de détection (11) et/ou du dispositif de contrôle (20) est contrôlé par le codeur et un signal d'état représentatif de leur état de fonctionnement est émis.

14. Procédé selon la revendication 13, dans lequel un signal d'alarme représentant un état de fonctionnement défectueux est émis, lorsque la durée de vie limite est passée lors du contrôle de l'état d'usure et/ou le signal d'état représentatif du contrôle du fonctionnement représente un dysfonctionnement.

15. Procédé selon l'une des revendications 6 à 14, dans lequel, en cas de dépassement d'une valeur limite d'alarme par une grandeur d'état contrôlée, un signal d'alarme est émis indépendamment des valeurs des autres grandeurs d'état contrôlées.
